# EUROPÄISCHE PATENTSCHRIFT

(11) **EP 1 790 208 B1**
(45) Veröffentlichungstag und Bekanntmachung des Hinweises auf die Patenterteilung: **16.07.2014**
(21) Anmeldenummer: 06120086.1
(22) Anmeldetag: 05.09.2006
(51) Int. Cl.: A01F 12/44, A01D 41/12

(54) **Mähdrescher mit Sauggebläse**
Combine with suction fan
Moissonneuse-batteuse avec ventilateur aspirateur

(30) Priorität: 23.11.2005 DE 102005056115
(43) Veröffentlichungstag der Anmeldung: 30.05.2007
(73) Patentinhaber: CLAAS Selbstfahrende Erntemaschinen GmbH, 33428 Harsewinkel (DE)
(72) Erfinder: Baumgarten, Joachim, Dr., 48361 Beelen (DE); Niermann, Martin, 33428 Harsewinkel (DE); Claes, Ulrich, 49201 Dissen (DE); Bellmann, Reiner, 33428 Harsewinkel (DE); Terörde, Stefan, 48231 Warendorf (DE); Schulz, Waldemar, 33100 Paderborn (DE)

(56) Entgegenhaltungen:
- EP-A- 1 177 719
- EP-A1- 0 631 717
- EP-A1- 1 219 164
- WO-A1-02/34029
- DE-A1- 2 620 875
- DE-A1- 19 750 393
- DE-B- 1 927 262
- US-A- 4 591 102
- US-A- 4 869 272

## Beschreibung

Die Erfindung betrifft einen Mähdrescher mit einem Sauggebläse nach dem Oberbegriff des Anspruchs 1.

Aus der DE 26 20 875 ist ein Mähdrescher mit einer aus zwei übereinander angeordneten Sieben und einem Druckgebläse bestehenden Körnerreinigungseinrichtung bekannt, wobei das Druckgebläse von schräg unten durch die Siebe bläst. Über dem obersten Sieb ist im hinteren Bereich des Maschinengehäuses zusätzlich ein Sauggebläse mit einem Spreusaugkasten angeordnet, das die Durchblaswirkung des Druckgebläses verstärkt und einen Teil der sich über dem obersten Sieb fortbewegenden Spreu absaugt und durch das Sauggebläse hindurch aus dem Mähdrescher fördert, wobei die Spreu hinter dem Mähdrescher aus der Düse direkt auf den Feldboden fällt.

Nachteilig bei diesem bekannten Sauggebläse ist, dass die Energie des erzeugten Saugluftstromes lediglich zum Transport einer Erntegutmenge aus dem Maschinengehäuse in das Sauggebläse genutzt wird und zudem zwei separate Druckluftreinigungssysteme für die Reinigungseinrichtung vorgesehen werden müssen.

Die US 4,591,102A beschreibt einen Mähdrescher gemäß dem Oberbegriff des Anspruches 1 mit einem Sauggebläse, welches einen Gutstrom aus dem Maschinengehäuse hinaus fördert.

Der Erfindung liegt daher die Aufgabe zugrunde, die Nachteile des Standes der Technik zu vermeiden und insbesondere ein Sauggebläse vorzuschlagen, das neben der Abförderung eines überwiegend aus Spreu bestehenden Gutstroms aus der Reinigungseinrichtung auch dessen Verteilung auf dem Boden bewirkt.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem das Sauggebläse auch die Verteilung des Gutstroms über die Verteilbreite bewirkt, wobei dem Sauggebläse ein umlaufender Verteiler zugeordnet ist und weiter das Sauggebläse den Gutstrom an den Verteiler übergibt und dieser die Verteilung des Gutstroms auf dem Boden bewirkt, wobei der Verteiler als eine Kugelkalotte ausgeführt ist, wird die Energie des aus dem Saugluftgebläse austretenden Gut- bzw. Druckluftstromes nachgenutzt. Dies hat insbesondere den Vorteil, dass sich die erforderliche Anzahl der notwendigen Arbeitsorgane reduzieren lässt, da das Sauggebläse sowohl Absaugeinrichtung als auch Verteileinrichtung ist.

Dem Mähdrescher ist zumindest eine Reinigungseinrichtung zugeordnet, wobei das Sauggebläse als Reinigungsgebläse ausgebildet ist und das Sauggebläse zugleich die Verteilung des zumindest aus der Reinigungseinrichtung abgeführten Gutstroms auf dem Boden bewirkt, so dass das Sauggebläse gleichzeitig mehrere Aufgaben erfüllt und damit effektiv genutzt wird.

Der dem Sauggebläse zugeordnete umlaufende Verteiler, an den das Sauggebläse den Gutstrom übergibt, bewirkt die Verteilung des Gutstroms auf dem Boden, so dass die kinetische Energie des Gutstrom beim Eintritt in den Verteiler weitestgehend erhalten bleibt und zur Erzielung einer größeren Wurfweite genutzt werden kann.

In einer vorteilhaften Ausgestaltung der Erfindung ist dem Sauggebläse eine Verteilhaube zugeordnet und das Sauggebläse übergibt den Gutstrom an die Verteilhaube, die die Verteilung des Gutstroms auf dem Boden bewirkt, so dass der Gutstrom unterschiedlich stark umgelenkt wird, um eine gleichmäßige Verteilung des Gutstroms auf dem Boden zu erreichen.

Wenn der Verteiler aktiv oder passiv in Drehbewegung versetzt wird, kann einerseits die Reibung zwischen dem auftreffenden Gutstrom und dem Verteiler reduziert und dadurch ein Abbremsen des Gutstroms durch den Verteiler reduziert werden.

Andrerseits führt ein aktiver Antrieb dazu, dass das austretende Gut nochmals beschleunigt werden kann und mithin noch größere Verteitbreiten realisierbar sind.

Dadurch, dass das Sauggebläse aus einer Vielzahl von Sauggebläseeinheiten gebildet wird, wobei jede Gebläseeinheit nach wenigstens einem der Ansprüche 1 bis 6 ausgestaltet ist, wird ein über die gesamte Breite der Reinigungseinrichtung annähernd gleichstarker Saugluftstrom erzeugt.

In vorteilhafter Ausgestaltung der Erfindung weist das Sauggebläse zumindest einen Rotor auf, der in einem Gehäuse rotiert, wobei das Gehäuse einen Austragkanal aufweist, der in seiner Ausrichtung veränderbar ist, so dass der Gutstrom in seiner Bewegungsrichtung verstellbar ist.

In einer vorteilhaften Weiterbildung der Erfindung sind die Austragkanäle oszillierend angetrieben, so dass die Bewegungsrichtung des Gutstroms permanent verstellbar ist, um eine gleichmäßige Verteilung des Gutstroms auf dem Boden zu erzielen.

In weiterer vorteilhafter Ausgestaltung der Erfindung weist der Mähdrescher einen Strohhäcksler auf, wobei ein vom Strohhäcksler erzeugter Häckselgutstrom dem Sauggebläse zugeführt wird, so dass der Häckselgutstrom und das Kaff zusammen von dem Sauggebläse in den Verteiler gefördert und von diesem verteilt werden.

In einer vorteilhaften Ausgestaltung der Erfindung wird der aus dem Sauggebläse austretende Gutstrom mit dem aus dem Strohhäcksler austretenden Häckselgutstrom zusammengeführt und zusammen mit diesem an einen Verteiler übergeben, so dass der Häckselgutstrom vor dem Verteilen durch den aus dem Sauggebläse austretenden Gutstrom beschleunigt wird und die Gutströme vor dem Verteilen vermischt werden.

Dadurch, dass das Sauggebläse zumindest einen Luftstrom durch wenigstens einen Ansaugstutzen hindurch in das Maschinengehäuse saugt, ist die Strömungsrichtung und der Eintrittsort des Saugluftstroms so gerichtet, das der Luftstrom einen von der Reinigungseinrichtung abgetrennten Gutstrom zumindest teilweise in das Sauggebläse fördert.

Indem die Reinigungseinrichtung die Körner von den spezifisch leichteren Nicht-Korn-Bestandteilen trennt, wobei der Saugluftstrom die von der Reinigungseinrichtung abgetrennten Nicht-Korn-Bestandteile zumindest teilweise in das Sauggebläse fördert, wird das Obersieb entlastet und damit die Reinigungswirkung der Reinigungseinrichtung optimiert.

In weiterer Ausgestaltung der Erfindung weist die Reinigungseinrichtung mehrere übereinander angeordnete Siebe auf und der durch den Ansaugstutzen angesaugte Saugluftstrom strömt von unten nach oben durch die Siebe, so dass das über die Siebe geführte Erntegut aufgelockert wird und die spezifisch leichteren Erntegutbestandteile aus dem Erntegut herausgetrennt werden.

Weitere vorteilhafte Ausgestaltungen sind Gegenstand weiterer Unteransprüche und werden nachfolgend an Hand der in mehrerer Figuren dargestellten Ausführungsbeispiele näher erläutert.

Es zeigen:
Fig. 1 eine Seitenansicht eines Mähdreschers mit einem erfindungsgemäßen Sauggebläse.
Fig. 2 einen hinteren Abschnitt einer Draufsicht auf einen Mähdrescher nach Fig.1 mit einem weiteren Ausführungsbeispiel eines erfindungsgemäßen Sauggebläses.
Fig.3 einen Ausschnitt einer Seitenansicht des Mähdreschers nach Fig. 1 mit einem weiteren Ausführungsbeispiel eines erfindungsgemäßen Sauggebläses.

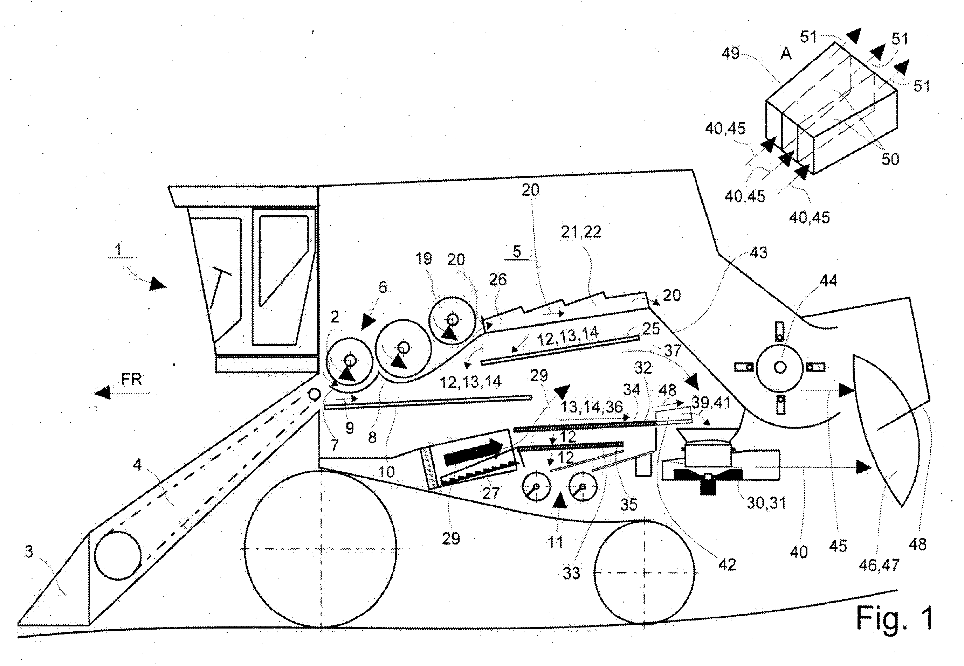

Fig.1 zeigt eine als Mähdrescher 1 ausgeführte landwirtschaftliche Arbeitsmaschine.

Das Erntegut 2 wird zunächst von einem Schneidwerk 3 aufgenommen, das das Erntegut 2 einem Schrägförderer 4 zuführt, der frontseitig am Mähdrescher 1 angeordnet ist. Der Schrägförderer 4 übergibt das Erntegut 2 an das im Maschinengehäuse 5 angeordnete Dreschwerk 6. Das Dreschwerk 6 bearbeitet das Erntegut 2 intensiv, so dass die Körner aus den Früchten des Ernteguts 2 herausgelöst werden. Ein aus zum überwiegenden Teil aus Körnern bestehendes Korn-Spreu-Gemisch 9 wird an den Dresch- und Abscheidekörben 7, 8 des Dreschwerks 6 abgeschieden und gelangt über einen Vorbereitungsboden 10 zu der Reinigungseinrichtung 11, um die Körner 12 von den Nichtkornbestandteilen, das heißt von Halm 13 - und Spreuteilen 14 zu trennen.

Im rückwärtigen Bereich ist dem Dreschwerk 6 eine entgegen dem Uhrzeigersinn rotierende Wendetrommel 19 zugeordnet, die den aus dem Dreschwerk 6 austretenden, im wesentlichen aus ausgedroschenen Halmen bestehenden Gutstrom 20 annimmt und einem Abscheideorgan 21 wie beispielsweise einem Hordenschüttler 22 zuführt, der den Gutstrom 20 in den rückwärtigen Bereich des Mähdreschers 1 fördert.

Dabei werden die noch im Gutstrom 20 befindlichen Körner 12 sowie eventuell Kurzstroh 13 und Spreu 14 abgetrennt, indem sie durch die mit Sieböffnungen 26 versehenen Hordenschüttler 22 hindurch auf einen Rücklaufboden 25 fallen. Der Rücklaufboden 25 transportiert Körner 12, Kurzstroh 13 und Spreu 14 zum Vorbereitungsboden 10.

Die Körner 12, das Kurzstroh 13 und die Spreu 14 gelangen schließlich ebenfalls über den Vorbereitungsboden 10 in die Reinigungseinrichtung 11, in welcher die Körner 12 vom Kurzstroh 13 und von der Spreu 14 getrennt werden.

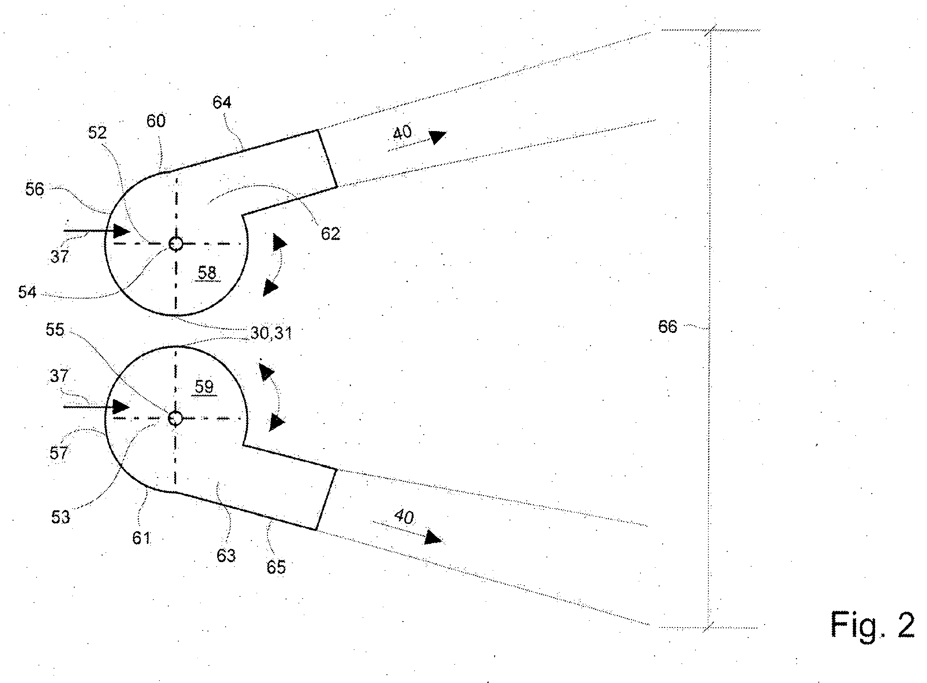

Im hinteren Bereich des Maschinengehäuses 5 des Mähdreschers 1 ist ein der Reinigungseinrichtung 11 zugeordnetes Reinigungsgebläse 31 angeordnet, das als Sauggebläse 30 ausgebildet ist und erfindungsgemäß einen Gutstrom 37 aus dem Maschinengehäuse 5 fördert und gleichzeitig die Verteilung des Gutstroms 37 über eine Verteilbreite 66 (siehe Fig.2) auf dem Feld bewirkt.

Hierzu saugt das Sauggebläse 30 durch einen Ansaugstutzen 27 hindurch einen Saugluftstrom 29 in das Maschinengehäuse 5. Der Ansaugstutzen 27 ist am hinteren Ende unterhalb des Vorbereitungsbodens 10 vor den Sieben 34, 35 angeordnet, so dass der Saugluftstrom 29 von unten nach oben durch die Sieböffnungen 32, 33 des Obersiebs 34 und des Untersiebs 35 der Reinigungseinrichtung 11 hindurchströmt, wodurch er das über die Siebe 34, 35 in den hinteren Bereich des Mähdreschers 1 geführte Erntegut 36 auflockert und für das Heraustrennen der spezifisch leichteren Spreu- und Kurzstrohanteile 13, 14 sorgt, während die schweren Erntegutkörner 12 durch die Sieböffnungen 32, 33 fallen.

Die zwischen dem Rücklaufboden 25 und dem Obersieb 34 befindlichen spezifisch leichteren Spreu- und Kurzstrohanteile 13, 14, die zusammen den Gutstrom 37 ergeben, werden zumindest teilweise vom Sauggebläse 30 aus dem Maschinengehäuse 5 heraus gesaugt. Das Sauggebläse 30 übergibt den aus dem Sauggebläse 30 austretenden, den Gutstrom 37 beinhaltenden Kaff-Luftstrom 40 an einen dem Sauggebläse 30 nachgeordneten, an späterer Stelle noch näher erläuterten Verteiler 47, der eine Verteilung des Gutstroms 37 auf dem Boden über eine Verteilbreite 66 (siehe Fig.2) bewirkt.

Der aus Kaff 39 bestehende Siebüberlauf 41, der nicht durch das Obersieb 34 hindurch fällt, gelangt über ein Förderelement 42 ebenfalls in das Sauggebläse 30. Ein ausgedroschenes Stroh-Spreu-Gemisch 20 sowie ein bestimmter Prozentsatz an Verlustkörnern wandern über den Hordenschüttler 22 zum hinteren Ende des Mähdreschers 1 und rutschen über ein Leitblech 43 in einen Strohhäcksler 44, in dem das Stroh-Spreu-Gemisch 20 zerkleinert und dabei beschleunigt wird. Der Strohhäcksler 44 ist im dargestellten Ausführungsbeispiel in Fahrtrichtung FR des Mähdreschers 1 hinter dem Sauggebläse 30 sowie in vertikaler Richtung oberhalb des Sauggebläses 30 angeordnet. Der Verteiler 47 ist in den Bewegungsbahnen des frei aus dem Strohhäcksler 44 austretenden Häckseigutstromes 45 und des frei aus dem Sauggebläse 30 austretenden Kaff-Luftstromes 40 angeordnet. Der Verteiler 47 ist als eine Kugelkalotte 46 ausgeführt, welche um eine Drehachse 48 drehbar außen am Maschinengehäuse 5 gelagert ist. Die auf die Innenseite der Kugelkalotte 46 auftreffende Ströme 40, 45 werden durch die Kugelkalotte 46 umgelenkt und auf dem Feld verteilt, wobei die Richtung und Stärke der Umlenkung abhängig vom Auftreffpunkt und der Ausrichtung von Häckselgutstrom 45 beziehungsweise Kaff-Luftstrom 40 und der Kugelkalotte 46 ist. Die Kugelkalotte 46 kann entweder aktiv durch einen separaten Antrieb oder passiv durch den Kaff-Luftstrom 40 oder den Häckselgutstrom 45 in eine Drehbewegung um die Drehachse 48 versetzt werden.

An Stelle des Verteilers 47 kann eine wie im Ausschnitt A der Fig.1 dargestellte Verteilhaube 49 im hinteren Bereich des Mähdreschers angeordnet sein. Der Verteilhaube 49 werden sowohl der aus dem Strohhäcksler 44 austretende Häckselgutstrom 45 als auch der aus dem Sauggebläse 30 austretende Kaff-Luftstrom 40 zugeführt. Die Gutströme 40, 45 werden durch mehrere in der Verteilhaube 49 angeordnete Leitbleche 50 in Teilgutströme 51 aufgeteilt und die Teilgutströme 51 in unterschiedliche Richtungen umgelenkt, so dass die Gutströme 40, 45 auf dem Feld verteilt werden.

Fig.2 zeigt den hinteren Abschnitt einer Draufsicht auf einen Mähdrescher mit einem weiteren Ausführungsbeispiel eines erfindungsgemäßen Sauggebläses 30. Das Sauggebläse 30 besteht aus zwei nebeneinander angeordneten Rotoren 52, 53, die in entgegengesetzten Richtungen um parallele Drehachsen 54, 55 rotieren. Jeder Rotor 52, 53 ist in einem Gehäuse 56, 57 angeordnet, das einen unterseitigen Deckel 58, 59 und eine den Umfang des jeweiligen Rotors 52, 53 umgreifende Wandung 60, 61 aufweist, wobei in der Wandung 60, 61 eine Auslassöffnung 62, 63 vorgesehen ist, an die sich radial ein Austragskanal 64, 65 anschließt. Die Gehäuse 56, 57 sind um die Drehachse 54, 55 des zugehörigen Rotors 52, 53 verdrehbar, so dass die Position des Austragkanals 64, 65 verstellbar ist. Das Sauggebläse 30 fördert den Gutstrom 37 durch die Austragkanäle 64, 65 hindurch aus dem Maschinengehäuse 5 hinaus und verteilt den aus dem Sauggebläse 30 austretenden Kaff-Luftstrom 40 erfindungsgemäß in einer Verteilbreite 66 auf dem Feld. Die Verteilbreite 66 des Kaff-Luftstroms 40 kann durch die Änderung der Ausrichtung der Austragskanäle 64, 65 der Gehäuse 56, 57 angepasst werden. Es ist denkbar, dass die Gehäuse 56, 57 oszillierend angetrieben sind, um die Ausrichtung der Austragkanäle 64, 65 und damit die Verteilbreite 66 ständig zu verändern. Es ist denkbar, dass der aus dem Strohhäcksler 44 austretende Häckselgutstrom 45 zusätzlich in das Sauggebläse 30 gefördert wird und das Sauggebläse 30 den Gutstrom 37 zusammen mit dem Häckselgutstrom 45 an einen Verteiler 47 übergibt, der die Verteilung des aus dem Sauggebläse 30 austretenden Kaff-Luft-Häckselgutstrom 71 über eine Verteilbreite 66 auf dem Feld verteilt.

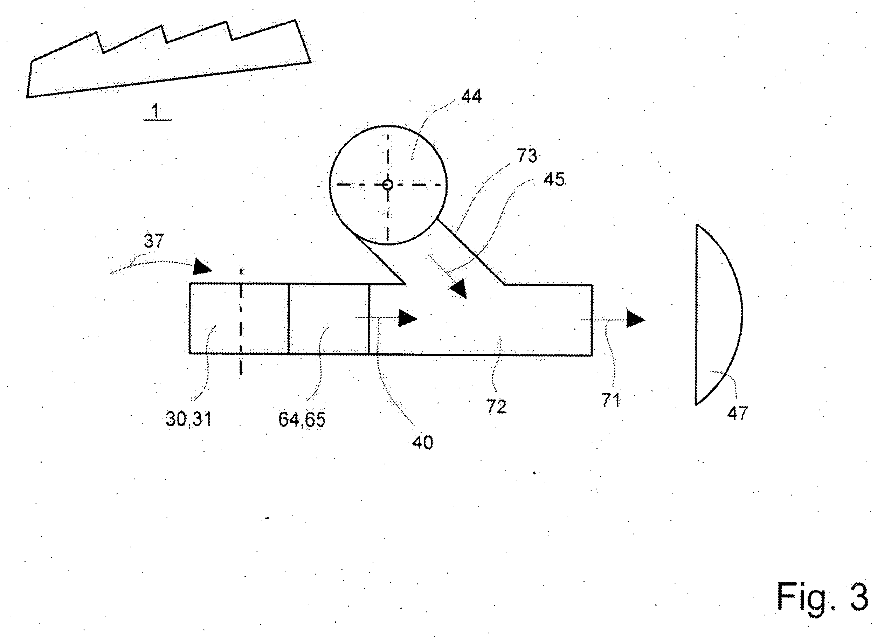

In Fig.3 ist ein weiteres Ausführungsbeispiel mit einem erfindungsgemäßen Sauggebläse 30 dargestellt.

Der Strohhäcksler 44 ist im dargestellten Ausführungsbeispiel in Fahrtrichtung FR des Mähdreschers 1 hinter dem Sauggebläse 30 sowie höher als das Sauggebläse 30 angeordnet. Der entgegen der Fahrtrichtung FR des Mähdreschers 1 annähernd horizontal aus dem Sauggebläse 30 austretende Kaff-Luftstrom 40 wird durch einen Ejektorkanal 72 geführt, der dem Austragkanal 64, 65 des Sauggebläses 30 nachgeordnet ist. An den Ejektorkanal 72 schließt mittig ein Zuführtrichter 73 an, durch den das radial entgegen der Fahrtrichtung FR des Mähdreschers 1 schräg nach unten aus dem Strohhäcksler 44 austretende Häckselgutstrom 45 dem Ejektorkanal 72 zugeführt wird, so dass beide Gutströme 40, 45 innerhalb des Ejektorkanals 72 zusammengeführt werden, Das Kaff-Luftstrom 40 beschleunigt den Häckselgutstrom 45 unter Beibehaltung der durch den Strohhäckslers 44 eingeleiteten kinetischen Energie. Hierzu ist es erforderlich, dass die Geschwindigkeit des Kaff-Luftstroms 40 höher als die Geschwindigkeit des Häckselgutstromes 45 ist, damit der Häckselgutstrom 45 nach dem Wirkprinzip eines Ejektors/Injektors vom Kaff-Luftstrom 40 mitgerissen wird. Das durch die Zusammenführung der beiden Gutströme 40, 45 entstehende, aus dem Ejektorkanal 72 austretende Kaff-Häckselgutstrom 71 wird einem dem Ejektorkanal 72 nachgeordneten Verteiler 47 zugeführt, der den Kaff-Häckselgutstrom 71 über die Verteilbreite auf dem Feld verteilt. Durch die Erhöhung der Geschwindigkeit des Häckselgutstroms 45 kann eine wesentlich größere Wurfweite und damit eine größere Verteilbreite durch den Verteiler 47 erzielt werden.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

**Bezugszeichenliste:**

| | | | |
|---|---|---|---|
| 1 | Mähdrescher | 39 | Kaff |
| 2 | Erntegut | 40 | Kaff-Luftstrom |
| 3 | Schneidwerk | 41 | Siebüberlauf |
| 4 | Schrägförderer | 42 | Förderelement |
| 5 | Maschinen gehäuse | 43 | Lettbiech |
| 6 | Dreschwerk | 44 | Strohhäcksler |
| 7 | Dresch und Abscheidekorb | 45 | Häckselgutstrom |
| 8 | Dresch- und Abscheidekorb | 46 | Kugelkalotte |
| 9 | Korn-Spreu-Gemisch | 47 | Verteiler |
| 10 | Vorbereitungsboden | 48 | Drehachse |
| 11 | Reinigungseinrichtung | 49 | Verteilhaube |
| 12 | Körner | 50 | Leitblech |
| 13 | Halmteile | 51 | Teilströme |
| 14 | Spreuteile 52 | 52 | Rotor |
| 19 | Wendetrommel | 53 | Rotor |
| 20 | Gutstrom 54 | | Drehachse |
| 21 | Abscheideorgan | 55 | Drehachse |
| 22 | Hordenschüttter | 56 | Gehäuse |
| 25 | Rücklaufboden | 57 | Gehäuse |
| 26 | Sieböffhungen | 58 | Deckel |
| 27 | Ansaugstutzen | 59 | Deckel |
| 29 | Saugluftstrom | 60 | Wandlung |
| 30 | Säuggebläse | 61 | Wandung |
| 31 | Reinigungsgeblase | 62 | Auslassöffnung |
| 32 | Sieböffnung | 63 | Auslassöffnung |
| 33 | Sieboffnung | 64 | Austragkanal |
| 34 | Obersieb | 65 | Austragkanal |
| 35 | Untersteb | 66 | Verteilbreite |
| 36 | Erntegut | 71 | Kaff-Luft-Strhhäckselstrom. |
| 37 | Gutstrom | 72 | Ejektorkanal |
| 73 | Zuführichter | | |
| FR | Fahftrichtung | | |

## Patentansprüche

1. Selbstfahrender Mähdrescher (1) mit einem Sauggebläse (30), wobei das Sauggebläse (30) zumindest einen Gutstrom (37) aus dem Maschinengehäuse (5) des Mähdreschers (1) heraus fördert, wobei das Sauggebläse (30) die Verteilung des Gutstroms (37) über eine Verteilbreite (66) bewirkt, wobei dem Mähdrescher (1) zumindest eine Reinigungseinrichtung (11) zugeordnet ist, wobei der Reinigungseinrichtung (11) ein Reinigungsgebläse (31) zugeordnet ist, das als Sauggebläse (30) ausgebildet ist und das Sauggebläse (30) zugleich die Verteilung des zumindest aus der Reinigungseinrichtung (11) abgeführten Gutstroms (37) auf dem Boden bewirkt, **dadurch gekennzeichnet,**
**dass** dem Sauggebläse (30) ein umlaufender Verteiler (47) zugeordnet ist und weiter das Sauggebläse (30) den Gutstrom (37) an den Verteiler (47) übergibt und dieser die Verteilung des Gutstroms (37) auf dem Boden bewirkt, wobei der Verteiler (47) als eine Kugelkalotte (46) ausgeführt ist.

2. Selbstfahrender Mähdrescher nach wenigstens einem der vorhergehenden Ansprüche,
**dadurch gekennzeichnet,**
**dass** dem Sauggebläse (30) eine Verteilhaube (49) zugeordnet ist und weiter das Sauggebläse (30) den Gutstrom (37) an die Verteilhaube (49) übergibt und diese die Verteilung des Gutstroms (37) auf dem Boden bewirkt.

3. Selbstfahrender Mähdrescher nach Anspruch 1,
**dadurch gekennzeichnet,**
**dass** der Verteiler (47) aktiv oder passiv in Drehbewegung versetzt wird.

4. Selbstfahrender Mähdrescher nach wenigstens einem der vorhergehenden Ansprüche,
**dadurch gekennzeichnet,**
**dass** das Sauggebläse (30) aus einer Vielzahl von Sauggebläseeinheiten gebildet wird und jedes Sauggebläseeinheit nach einem der Ansprüche 1 bis 3 ausgestaltet ist.

5. Selbstfahrender Mähdrescher nach wenigstens einem der vorhergehenden Ansprüche,
**dadurch gekennzeichnet,**
**dass** das Sauggebläse (30) zumindest einen Rotor (52, 53) aufweist, der in einem Gehäuse (56, 57) rotiert, wobei das Gehäuse (56, 57) zumindest einen Austragkanal (64, 65) aufweist, der in seiner Ausrichtung veränderbar ist.

6. Selbstfahrender Mähdrescher nach wenigstens einem der vorhergehenden Ansprüche,
**dadurch gekennzeichnet,**
**dass** der oder die Austragkanäle (64, 65) oszillierend angetrieben sind.

7. Selbstfahrender Mähdrescher nach wenigstens einem der vorhergehenden Ansprüche,
**dadurch gekennzeichnet,**
**dass** der Mähdrescher (1) einen Strohhäcksler (44) aufweist, wobei ein vom Strohhäcksler (44) erzeugter Häckselgutstrom (45) dem Sauggebläse (30) zuführbar ist.

8. Selbstfahrender Mähdrescher nach wenigstens einem der vorhergehenden Ansprüche,
**dadurch gekennzeichnet,**
**dass** der aus dem Sauggebläse (30) austretende Gutstrom (40) mit dem aus dem Strohhäcksler (44) austretenden Häckselgutstrom (45) zusammengeführt wird und zusammen mit diesem an einen Verteiler (47) übergeben wird.

9. Selbstfahrender Mähdrescher nach wenigstens einem der vorhergehenden Ansprüche,
**dadurch gekennzeichnet,**
**dass** das Sauggebläse (30) zumindest einen Saugluftstrom (29) durch wenigstens einen Ansaugstutzen (27) hindurch in das Maschinengehäuse (5) des Mähdreschers (1) saugt.

10. Selbstfahrender Mähdrescher nach wenigstens einem der vorhergehenden Ansprüche,
**dadurch gekennzeichnet,**
**dass** die Reinigungseinrichtung (11) die Körner (12) von den spezifisch leichteren Nicht-Korn-Bestandteilen (13, 14, 37) trennt, wobei der Saugluftstrom (29) die von der Reinigungseinrichtung (11) abgetrennten Nicht-Korn-Bestandteile (13, 14, 37) zumindest teilweise in das Sauggebläse (30) fördert.

11. Selbstfahrender Mähdrescher nach wenigstens einem der vorhergehenden Ansprüche,
**dadurch gekennzeichnet,**
**dass** die Reinigungseinrichtung (11) mehrere übereinander angeordnete Siebe (34, 35) aufweist und der durch den Ansaugstutzen (27) angesaugte Saugluftstrom (29) von unten nach oben durch die Siebe (34, 35) strömt.

## Claims

1. A self-propelled combine harvester (1) having a suction fan (30), wherein the suction fan (30) conveys at least one material flow (37) out of the machine housing (5) of the combine harvester (1), wherein the suction fan (30) causes distribution of the material flow (37) over a distribution width (66), wherein at least one cleaning device (11) is associated with the combine harvester (1), wherein associated with the cleaning device (11) is a cleaning fan (31) in the form of a suction fan (30) and the suction fan (30) at the same time causes distribution of the material flow (37) discharged at least from the cleaning device (11) on the ground, **characterised in that** a circulating distributor (47) is associated with the suction fan (30) and in addition the suction fan (30) transfers the material flow (37) to the distributor (47) and same causes distribution of the material flow (37) on the ground, wherein the distributor (47) is in the form of a portion of a sphere (46).

2. A self-propelled combine harvester according to claim 1 **characterised in that** a distributor hood (49) is associated with the suction fan (30) and in addition the suction fan (30) transfers the material flow (37) to the distributor hood (49) and same causes distribution of the material flow (37) on the ground.

3. A self-propelled combine harvester according to claim 1 **characterised in that** the distributor (47) is actively or passively rotated.

4. A self-propelled combine harvester according to at least one of the preceding claims **characterised in that** the suction fan (30) is formed from a plurality of suction fan units and each suction fan unit is designed according to one of claims 1 to 3.

5. A self-propelled combine harvester according to at least one of the preceding claims **characterised in that** the suction fan (30) has at least one rotor (52, 53) rotating in a housing (56, 57), wherein the housing (56, 57) has at least one discharge passage (64, 65) which is variable in its orientation.

6. A self-propelled combine harvester according to at least one of the preceding claims **characterised in that** the discharge passage or passages (64, 65) are oscillatingly driven.

7. A self-propelled combine harvester according to at least one of the preceding claims **characterised in that** the combine harvester (1) has a straw chopper (44), wherein a chopped material flow (45) produced by the straw chopper (44) can be fed to the suction fan (30).

8. A self-propelled combine harvester according to at least one of the preceding claims **characterised in that** the material flow (40) issuing from the suction fan (30) is brought together with the chopped material flow (45) issuing from the straw chopper (44) and is transferred together with same to a distributor (47).

9. A self-propelled combine harvester according to at least one of the preceding claims **characterised in that** the suction fan (30) sucks at least one suction air flow (29) through at least one suction intake connection (27) into the machine housing (5) of the combine harvester (1).

10. A self-propelled combine harvester according to at least one of the preceding claims **characterised in that** the cleaning device (11) separates the grains (12) from the specifically lighter non-grain constituents (13, 14, 37), wherein the suction air flow (29) at least partially conveys the non-grain constituents (13, 14, 37) separated off by the cleaning device (11) into the suction fan (30).

11. A self-propelled combine harvester according to at least one of the preceding claims **characterised in that** the cleaning device (11) has a plurality of mutually superposed sieves (34, 35) and the suction air flow (29) sucked in through the suction intake connection (27) flows from below upwardly through the sieves (34, 35).

## Revendications

1. Moissonneuse-batteuse automotrice (1) comprenant un ventilateur aspirant (30), lequel ventilateur aspirant (30) transporte au moins un flux de produit (37) hors du carter de machine (5) de la moissonneuse-batteuse (1), lequel ventilateur aspirant (30) entraînant la distribution du flux de produit (37) sur une largeur de distribution (66), au moins un dispositif de nettoyage (11) étant associé à la moissonneuse-batteuse (1), auquel dispositif de nettoyage (11) est associé un ventilateur de nettoyage (31) réalisé sous la forme d'un ventilateur aspirant (30), lequel ventilateur aspirant (30) entraîne en même temps la distribution sur le sol du flux de produit (37) évacué au moins du dispositif de nettoyage (11), **caractérisée en ce qu'**un distributeur rotatif (47) est associé au ventilateur aspirant (30) et **en ce que** le ventilateur aspirant (30) transmet le flux de produit (37) au distributeur (47), lequel entraîne la distribution du flux de produit (37) sur le sol, le distributeur (47) étant réalisé sous la forme d'une calotte sphérique (46).

2. Moissonneuse-batteuse automotrice selon au moins l'une des revendications précédentes, **caractérisée en ce qu'**un capot de distribution (49) est associé au ventilateur aspirant (30) et **en ce que** le ventilateur aspirant (30) transmet le flux de produit (37) au capot de distribution (49), lequel entraîne la distribution du flux de produit (37) sur le sol.

3. Moissonneuse-batteuse automotrice selon la revendication 1, **caractérisée en ce que** le distributeur (47) est mis en rotation de manière active ou passive.

4. Moissonneuse-batteuse automotrice selon au moins l'une des revendications précédentes, **caractérisée en ce que** le ventilateur aspirant (30) est formé d'une pluralité d'unités de ventilateur aspirant, et chaque unité de ventilateur aspirant est configurée selon l'une des revendications 1 à 3.

5. Moissonneuse-batteuse automotrice selon au moins l'une des revendications précédentes, **caractérisée en ce que** le ventilateur aspirant (30) comporte au moins un rotor (52, 53) qui tourne dans un carter (56, 57), lequel carter (56, 57) comporte au moins un canal de décharge (64, 65) dont l'orientation est variable.

6. Moissonneuse-batteuse automotrice selon au moins l'une des revendications précédentes, **caractérisée en ce que** le ou les canaux de décharge (64, 65) sont entraînés en oscillation.

7. Moissonneuse-batteuse automotrice selon au moins l'une des revendications précédentes, **caractérisée en ce que** la moissonneuse-batteuse (1) comporte un hache-paille (44), un flux de produit haché (45) produit par le hache-paille (44) pouvant être amené au ventilateur aspirant (30).

8. Moissonneuse-batteuse automotrice selon au moins l'une des revendications précédentes, **caractérisée en ce que** le flux de produit (40) sortant du ventilateur aspirant (30) est réuni avec le flux de produit haché (45) sortant du hache-paille (44) et transmis avec celui-ci à un distributeur (47).

9. Moissonneuse-batteuse automotrice selon au moins l'une des revendications précédentes, **caractérisée en ce que** le ventilateur aspirant (30) aspire au moins un flux d'air d'aspiration (29) à travers au moins une tubulure d'aspiration (27) dans le carter de machine (5) de la moissonneuse-batteuse (1).

10. Moissonneuse-batteuse automotrice selon au moins l'une des revendications précédentes, **caractérisée en ce que** le dispositif de nettoyage (11) sépare les grains (12) des composants non-grains (13, 14, 37) de poids volumique inférieur, le flux d'air d'aspiration (29) transportant les composants non-grains (13, 14, 37) séparés par le dispositif de nettoyage (11) au moins partiellement dans le ventilateur aspirant (30).

11. Moissonneuse-batteuse automotrice selon au moins l'une des revendications précédentes, **caractérisée en ce que** le dispositif de nettoyage (11) comporte plusieurs grilles (34, 35) disposées les unes au-dessus des autres, et le flux d'air d'aspiration (29) aspiré à travers la tubulure d'aspiration (27) passe à travers les grilles (34, 35) de bas en haut.
